(19) Europäisches Patentamt / European Patent Office / Office européen des brevets

(11) **EP 2 504 816 B1**

(12) **FASCICULE DE BREVET EUROPEEN**

(45) Date de publication et mention
de la délivrance du brevet:
**08.05.2019 Bulletin 2019/19**

(51) Int Cl.:
***G06T 15/50*** (2011.01)

(21) Numéro de dépôt: **10777033.1**

(22) Date de dépôt: **18.11.2010**

(86) Numéro de dépôt international:
**PCT/EP2010/067727**

(87) Numéro de publication internationale:
**WO 2011/064132 (03.06.2011 Gazette 2011/22)**

(54) **PROCEDE D'ESTIMATION DE DIFFUSION DE LA LUMIERE**

VERFAHREN ZUR SCHÄTZUNG VON LICHTSTREUUNG

METHOD FOR ESTIMATING LIGHT SCATTERING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.11.2009 FR 0958288**

(43) Date de publication de la demande:
**03.10.2012 Bulletin 2012/40**

(73) Titulaire: **Thomson Licensing
92130 Issy-les-Moulineaux (FR)**

(72) Inventeurs:
• **GAUTRON, Pascal**
  **F-35576 Cesson Sevigne Cedec (FR)**
• **MARVIE, Jean-Eudes**
  **F-35576 Cesson Sevigne Cedex (FR)**
• **DELALANDRE, Cyril**
  **F-35576 Cesson Sevigne (FR)**

(74) Mandataire: **Vidon Brevets & Stratégie
16B, rue de Jouanet
BP 90333
35703 Rennes Cedex 7 (FR)**

(56) Documents cités:
• **TOKUYOSHI Y ET AL: "A fast rendering method
for a scene with participating media of
anisotropic scattering property", COMPUTER
GRAPHICS INTERNATIONAL 2005 STONY
BROOK, NY, USA JUNE 22-24, 2005,
PISCATAWAY, NJ, USA,IEEE LNKD-
DOI:10.1109/CGI.2005.1500423, 22 juin 2005
(2005-06-22), pages 227-233, XP010830152, ISBN:
978-0-7803-9330-1**
• **EVA CEREZO ET AL: "A survey on participating
media rendering techniques", THE VISUAL
COMPUTER ; INTERNATIONAL JOURNAL OF
COMPUTER GRAPHICS, SPRINGER, BERLIN, DE
LNKD- DOI:10.1007/S00371-005-0287-1, vol. 21,
no. 5, 1 juin 2005 (2005-06-01), pages 303-328,
XP019339111, ISSN: 1432-8726**

**Description**

**1. Domaine de l'invention.**

L'invention se rapporte au domaine de la composition d'images de synthèse et plus particulièrement au domaine de la simulation de la diffusion de la lumière dans un milieu participant hétérogène. L'invention s'inscrit également dans le contexte des effets spéciaux pour une composition en temps réel (de l'anglais « live »).

**2. Etat de l'art.**

Selon l'état de la technique, différentes méthodes existent pour simuler la diffusion de la lumière dans des milieux participants tels que par exemple le brouillard, la fumée, la poussière ou les nuages. Les milieux participants correspondent à des milieux composés de particules en suspension qui interagissent avec la lumière pour en modifier le trajet et l'intensité notamment.

Les milieux participants peuvent être décomposés en deux parties, à savoir les milieux homogènes tels que l'eau et les milieux hétérogènes, tels que la fumée ou les nuages. Dans le cas des milieux participants homogènes, il est possible de calculer de manière analytique l'atténuation de la lumière émise par une source de lumière. En effet, de part leur nature homogène, ces milieux présentent des paramètres tels que le coefficient d'absorption de la lumière ou le coefficient de diffusion de la lumière de valeur constante en tout point du milieu. A contrario, les propriétés d'absorption et de diffusion de la lumière varient d'un point à un autre dans un milieu participant hétérogène. Les calculs nécessaires pour simuler la diffusion de la lumière dans un tel milieu hétérogène sont alors très coûteux et il n'est ainsi pas possible de calculer de manière analytique et en temps réel la quantité de lumière diffusée par un milieu participant hétérogène. De plus, le milieu n'étant pas diffus, la quantité de lumière diffusée par le milieu varie également en fonction de la direction de diffusion de la lumière, c'est-à-dire de la direction dans laquelle une personne regarde ce milieu. Les calculs estimant la quantité de lumière diffusée doivent alors être réitérés pour chaque direction d'observation du milieu par une personne pour obtenir un rendu réaliste du milieu.

Pour effectuer le rendu en temps réel de milieux participant hétérogène, certaines méthodes effectuent le précalcul de certains paramètres représentatifs du milieu participant hétérogène. Si ces méthodes sont parfaitement adaptés pour une utilisation en studio de post-production par exemple et fournissent un rendu de bonne qualité, ces méthodes ne sont pas adaptés dans le contexte de conception interactive et de composition de rendu en temps réel d'un milieu participant hétérogène. D'autres méthodes telle que la méthode d'échantillonnage de rayon (de l'anglais « ray-marching algorithm ») bien connue de l'homme du métier (décrite par exemple dans le document intitulé « Radiative Transfer Equation » de S. Chandrasekhar, publié en 1960 dans Dover Publications) consistent à échantillonner le milieu participant hétérogène selon une direction de diffusion et/ou une direction d'émission de la lumière pour estimer l'atténuation de la lumière en un nombre de points du milieu, le nombre de points dépendant de la précision de l'échantillonnage. Un tel échantillonnage peut être très coûteux en calculs, notamment lorsqu'il est très fin et/ou lorsque le milieu échantillonnée est complexe et/ou de taille importante. Le document "A fast rendering method for a scene with participating media of anisotropic scattering property" de Y. Tokuyoshi et al., IEEE Proceedings of Computer Graphics International 2005, décrit un rendu de milieu participant hétérogène par échantillonnage préférentiel utilisant une structure hiérarchique de subdivision spatiale.

Avec l'émergence de jeux et d'applications de simulation interactifs, notamment en trois dimensions (3D), le besoin se fait sentir pour des méthodes de simulations temps réel offrant un rendu de milieux participants hétérogènes réaliste.

**3. Résumé de l'invention.**

L'invention a pour but de pallier au moins un de ces inconvénients de l'art antérieur.

Plus particulièrement, l'invention a notamment pour objectif d'optimiser les temps de calcul nécessaire pour composer un rendu réaliste de la diffusion de la lumière dans un milieu participant hétérogène.

L'invention concerne un procédé d'estimation de la quantité de lumière diffusée par un milieu participant hétérogène, le procédé comprenant les étapes de :

-    sélection d'au moins un niveau de subdivision spatiale du milieu parmi une pluralité de niveaux hiérarchiques de subdivision spatiale selon au moins une information d'erreur représentative d'une différence d'atténuation de la lumière dans le milieu selon au moins une direction entre deux niveaux hiérarchiques consécutifs, ladite sélection comprenant une comparaison de ladite information d'erreur à une valeur seuil, le niveau de subdivision spatiale sélectionné correspondant au niveau de position hiérarchique le plus élevé et de subdivision moins fine si ladite au moins une information d'erreur est inférieure à ladite valeur seuil, et la au moins une direction étant échantillonnée en un ensemble d'échantillons, un premier niveau de subdivision spatiale étant sélectionné et associé à au moins un premier échantillon dudit ensemble, pour tous les autres échantillons dudit ensemble situés en aval du premier échantillon dans ladite direction, le niveau de subdivision spatiale sélectionné est hiérarchiquement supérieur ou égal au premier niveau de subdivision spatiale;

- estimation de la quantité de lumière diffusée par échantillonnage dudit milieu le long d'au moins une direction de diffusion, l'échantillonnage étant fonction du au moins un niveau de subdivision spatiale sélectionné.

De manière avantageuse, le procédé comprend une étape d'estimation d'au moins une première valeur représentative de l'atténuation de la lumière diffusée par au moins un point du milieu situé le long de ladite au moins une direction de diffusion.

Selon une caractéristique particulière, le procédé comprend une étape d'estimation d'au moins une deuxième valeur représentative de l'atténuation de la lumière reçue d'au moins une source lumineuse selon au moins une direction d'émission de la lumière en le au moins un point situé le long de la au moins une direction de diffusion.

Avantageusement, la au moins une information d'erreur est déterminée par comparaison de deux premières valeurs, les deux premières valeurs étant estimées respectivement pour deux niveaux de subdivision spatiale hiérarchiques consécutifs du milieu.

Selon une autre caractéristique, la au moins une information d'erreur est déterminée par comparaison de deux deuxièmes valeurs, les deux deuxièmes valeurs étant estimées respectivement pour deux niveaux de subdivision spatiale hiérarchiques consécutifs du milieu.

### 4. Liste des figures.

L'invention sera mieux comprise, et d'autres particularités et avantages apparaîtront à la lecture de la description qui va suivre, la description faisant référence aux dessins annexés parmi lesquels :

- la figure 1 illustre schématiquement un milieu participant hétérogène diffusant de la lumière, selon un mode de réalisation particulier de l'invention ;
- les figure 2A et 2B illustrent deux représentations d'un arbre de subdivision spatiale d'un milieu de la figure 1, selon un mode de réalisation particulier de l'invention ;
- les figures 3A, 3B, 4A et 4B illustrent plusieurs niveaux de subdivision spatiale d'un milieu de la figure 1 selon une direction de diffusion de la lumière, selon un mode de réalisation particulier de l'invention ;
- la figure 5 illustre plusieurs niveaux de subdivision spatiale d'un milieu de la figure 1 selon une direction d'émission de la lumière, selon un mode de réalisation particulier de l'invention ;
- la figure 6 illustre un dispositif mettant en oeuvre une méthode d'estimation de la quantité de lumière diffusée par un milieu de la figure 1, selon un exemple de mise en oeuvre particulier de l'invention ;
- la figure 7 illustre un procédé d'estimation de la quantité de lumière diffusée par un milieu de la figure 1, selon un mode de réalisation particulier de l'invention.

### 5. Description détaillée de modes de réalisation de l'invention.

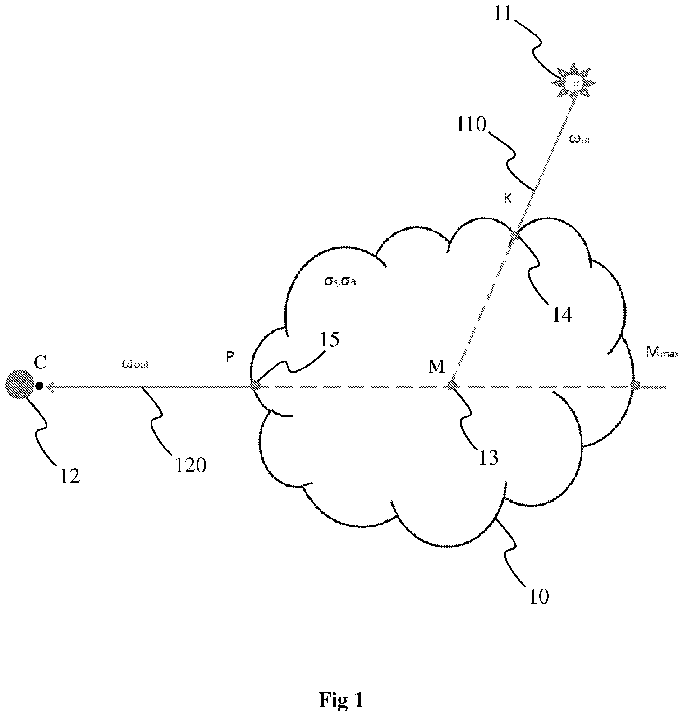

La **figure 1** illustre un milieu participant hétérogène 10 (de l'anglais « heterogeneous participating média »), par exemple un nuage. Un milieu participant est un milieu, composé d'une multitude de particules en suspension, qui absorbe, émet et/ou diffuse de la lumière. Dans sa forme la plus simple, un milieu participant absorbe seulement de la lumière, par exemple de la lumière reçue d'une source de lumière 11 telle que le soleil par exemple. Cela signifie que de la lumière passant au travers du milieu 10 est atténuée, l'atténuation dépendant de la densité du milieu. Le milieu étant hétérogène, c'est-à-dire que les caractéristiques physiques du milieu, telle que la densité des particules le composant par exemple, varient d'un point à un autre dans le milieu. Comme le milieu participant est composée de petites particules qui interagissent avec la lumière, la lumière incidente, c'est-à-dire reçue de la source de lumière 11 selon une direction $\omega_{in}$ 110 n'est pas seulement absorbée mais elle est également diffusée. Dans un milieu participant à diffusion isotrope, la lumière est diffusée uniformément dans toutes les directions. Dans un milieu participant à diffusion anisotrope, tel que le nuage 10 illustré en figure 1, la diffusion de la lumière dépend de l'angle entre la direction d'incidence $\omega_{in}$ 110 et la direction de diffusion $\omega_{out}$ 120 de la lumière. La quantité de lumière diffusée en un point M 13 du milieu 10 dans la direction de diffusion $\omega_{out}$ 120 est calculée par l'équation suivante :

$$Q(M, \omega_{out}) = D(M).\sigma_s.p(M, \omega_{out}, \omega_{in}).L_{ri}(M, \omega_{in}) \qquad \text{Equation 1}$$

La quantité de lumière diffusée par un point M 13 du milieu atteignant l'oeil d'un spectateur 12 situé en un point C de l'espace dans la direction $\omega_{out}$ 120, c'est-à-dire la quantité de lumière diffusée par le point M et atténuée par le milieu 10 sur le trajet M-P, le point P étant situé à l'intersection du milieu 10 et de la direction $\omega_{out}$ dans la direction du spectateur 12, est alors :

$$L_P(M, \omega_{out}) = Q(M, \omega_{out}).exp^{\int_P^M -D(s).\sigma_t.ds} \qquad \text{Equation 2}$$

pour laquelle :

- $\sigma_s$ est le coefficient de diffusion du milieu,
- $\sigma_a$ est le coefficient d'absorption du milieu,
- $\sigma_t = \sigma_s + \sigma_a$ est le coefficient d'extinction du milieu,
- D(M) est la densité du milieu en un point donné, la densité variant d'un point à un autre puisque le milieu 10 est hétérogène,
- $p(M, \omega_{out}, \omega_{in})$ est la fonction de phase décrivant comment la lumière provenant de la direction d'incidence $\omega_{in}$ est diffusée dans la direction de diffusion $\omega_{out}$ au point M,
- $L_{ri}(M, \omega_{in})$ est l'intensité lumineuse réduite au point M provenant de la direction d'incidence $\omega_{in}$ 110 et représente la quantité de lumière incidente arrivant au point M après atténuation due au trajet de la lumière dans le milieu 10 sur le segment K-M, K étant le point d'intersection entre le milieu 10 et le rayon d'incidence $\omega_{in}$ 110, et vaut :

$$exp^{\int_M^K -D(s)\sigma_t ds} \qquad \text{Equation 3}$$

- $exp^{\int_P^M -D(s)\sigma_t ds}$ représente l'atténuation de luminance diffusée due à l'absorption et à la diffusion le long du chemin allant de P 15 à M 13.

L'équation 2 permet de calculer la quantité de lumière diffusée par un point M et atteignant l'oeil d'un spectateur 12 situé sur la direction $\omega_{out}$. Pour calculer la quantité de lumière reçue par un spectateur regardant dans la direction $\omega_{out}$, il faut alors effectuer la somme de toutes les contributions de l'ensemble des points du milieu situés sur l'axe $\omega_{out}$, c'est-à-dire les points situés sur le segment P-$M_{max}$, P et $M_{max}$ étant les deux points d'intersection entre le milieu 10 et la direction $\omega_{out}$ 120. Cette luminance diffusée totale arrivant en P 15 depuis la direction $\omega_{out}$ 120 due à la diffusion simple est alors :

$$L(P, \omega_{out}) = \int_P^{Mmax} L_p(M, \omega_{out})dM \qquad \text{Equation 4}$$

On suppose ici que la lumière parcourant le trajet C-P n'est pas atténuée, la lumière n'étant pas atténuée à l'extérieur du milieu 10.

Cette luminance diffusée totale est obtenue par intégration des contributions de tous les points situés entre P et $M_{max}$ sur un rayon ayant $\omega_{out}$ comme direction. Une telle équation intégrale ne peut pas être résolue de manière analytique dans le cas général et encore moins pour une estimation en temps réel de la quantité de lumière diffusée. L'intégrale est évaluée numériquement en utilisant la méthode dite d'échantillonnage de rayon ou de suivi de rayon (de l'anglais « ray-marching »). Dans cette méthode, le domaine d'intégration est discrétisé en une multitude d'intervalles de taille $\delta_M$, pour lesquels la densité varie d'un intervalle à un autre, et on obtient l'équation suivante :

$$L(P, \omega_{out}) \approx \sum_P^{Mmax} L_P(M, \omega_{out})\delta_M \qquad \text{Equation 5}$$

De manière similaire, l'atténuation de la lumière issue d'une source de lumière 11 dans le milieu participant hétérogène 10 est avantageusement calculée par application de la méthode d'échantillonnage de rayon. Ainsi, l'atténuation de l'intensité lumineuse au point M $Att_L(M)$ 13 représentant la quantité de lumière incidente arrivant au point M après atténuation est représentée par l'équation suivante, équivalente à l'équation 3 :

$$Att_L(M) = \exp^{\int_K^M -D(s)\sigma_t ds} \qquad \text{Equation 6}$$

Pour estimer l'atténuation de la lumière au point M selon la méthode d'échantillonnage de rayon, le domaine d'intégration situé sur la direction d'incidence 110 considérée entre le point d'entrée K 14 du rayon lumineux 110 dans le milieu 10 et un point M 13 considéré du milieu 10 est discrétisé en une série d'intervalles de taille $\delta_s$. Par ailleurs, la densité varie également d'un point à un autre (ou autrement dit d'un intervalle $\delta_s$ à un autre) le long de la direction d'incidence (dite aussi direction d'émission de la lumière). On obtient alors l'équation suivante :

$$Att_L(M) \approx \prod_K^M exp^{-D(s)\sigma_t\delta_s} \qquad \text{Equation 7}$$

De manière avantageuse, le milieu participant hétérogène 10 est un élément à trois dimensions, représenté en deux dimensions sur la figure 1 pour des raisons de clarté.

Selon une variante, le milieu 10 est éclairé par une pluralité de sources lumineuses, par exemple 1000, 10000, 100000 ou 1000000 sources lumineuses, les sources lumineuses formant un environnement lumineux. L'estimation de la lumière provenant de plusieurs sources lumineuses distantes est réalisée en utilisant la méthode de carte d'environnement (de l'anglais « environment mapping ») bien connue de l'homme du métier. Selon la méthode dite de carte d'environnement, on considère que toutes les sources lumineuses de l'environnement lumineux sont situées à l'infini optique par rapport aux points du milieu 10. Il est ainsi possible de considérer que les directions prises par la lumière émise par différentes sources lumineuses sont identiques quels que soient les points considérés du milieu. L'effet de parallaxe dû à la distance séparant différents points du milieu 10 est ainsi négligé. Selon cette variante, pour estimer l'atténuation de la lumière incidente en un point M, il est nécessaire de calculer l'atténuation de la lumière via l'équation 7 pour un ensemble de directions d'incidence représentatif de l'environnement lumineux, ce qui augmente significativement les calculs.

Selon une autre variante, les caractéristiques physiques du milieu 10, telles que le coefficient de diffusion $\sigma_s$ du milieu et/ou le coefficient d'absorption $\sigma_a$ du milieu, varient également d'un point à un autre dans le milieu 10, tout comme la densité. Selon une variante supplémentaire, seul l'un des deux ou les deux coefficients $\sigma_s$ et $\sigma_a$ varient dans le milieu, la densité étant homogène dans le milieu.

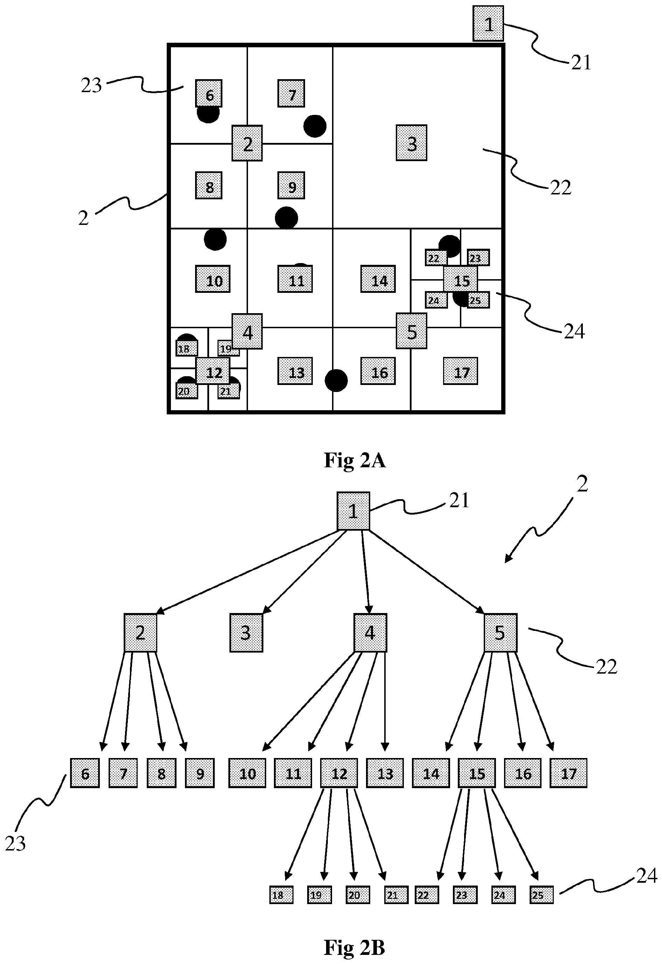

Les **figures 2A et 2B** illustrent un arbre de subdivisions spatiales du milieu 10 selon deux modes de représentation différents, selon un mode de réalisation particulier de l'invention.

Pour des raisons de clarté et de simplicité, le milieu 10 est représenté par une forme géométrique simple 2 (dite milieu 2 dans la description des figures 2A et 2B) à deux dimensions telle qu'un carré ou un rectangle sur la **figure 2A.** La surface du milieu 2 est subdivisée de manière hiérarchique en cellules de taille identiques pour former une structure de type « arbre quaternaire » (de l'anglais « quadtree »). Les points du milieu 2 appartenant à une même cellule ont des caractéristiques physiques identiques, par exemple la densité du milieu est la même en chaque point du milieu 2 d'une même cellule. Les caractéristiques physiques varient avantageusement d'une cellule à une autre. Selon une variante, les caractéristiques physiques de certaines cellules du milieu 2 présentent des caractéristiques physiques identiques, le milieu 2 restant globalement hétérogène, c'est-à-dire qu'au moins deux cellules présentent des caractéristiques physiques différentes. Le niveau hiérarchique le plus élevé est représenté par une seule cellule [1] formant le premier niveau 21 de subdivision spatiale du milieu 2, cette unique cellule ayant la même surface que celle du milieu 2. Le niveau hiérarchique immédiatement inférieur au premier niveau (dit deuxième niveau 22 de subdivision spatiale du milieu 2) est représenté par quatre cellules [2], [3], [4] et [5] de taille identique correspondant au quart de la taille de la cellule [1]. Le troisième niveau 23 de subdivision spatiale du milieu 2, de niveau hiérarchique inférieur et suivant le deuxième niveau 22, est représenté par 16 cellules de tailles identiques, par exemple les cellules [6] à [17]. La taille de chacune des cellules [6] à [17] correspond au quart de la taille des cellules [2] à [5], chaque cellule [2] à [5] ayant été respectivement divisée en quatre cellules ayant une taille identique. Le quatrième niveau 24 de subdivision spatiale du milieu 2, de niveau hiérarchique inférieur à et suivant le troisième niveau 23, est représenté par 64 cellules de tailles identiques, par exemple les cellules [18] à [25]. La taille de chacune des cellules [18] à [25] correspond au quart de la taille des cellules [6] à [17], chaque cellule du troisième niveau 23 [6] à [17] ayant été respectivement divisée en quatre cellules de taille identique. Pour généraliser cette structure, pour former un niveau Y de représentation spatiale directement inférieur au niveau X, cela revient à multiplier par quatre le nombre de cellules du niveau X pour obtenir le nombre de cellules formant le niveau Y.

Cette hiérarchie des niveaux apparaît de manière plus évidente en regard de la **figure 2B** dans laquelle les niveaux hiérarchiques de subdivisions spatiales apparaissent sous la forme d'une arborescence, les cellules formant des noeuds de l'arbre. Le premier niveau 21 de subdivision spatiale du milieu 2 comprend une unique cellule [1]. Le deuxième niveau 22 de subdivision spatiale du milieu 2 (de position hiérarchiquement inférieure au premier niveau) comprend quatre fois plus de cellules que le premier niveau, soit 4 cellules [2] à [5]. Le troisième niveau 23 de subdivision spatiale du milieu 2 (de position hiérarchiquement inférieure au deuxième niveau) comprend quatre fois plus de cellule que le deuxième niveau, soit 16 cellules [6] à [17]. Le quatrième niveau 24 de subdivision spatiale du milieu 2 (de position hiérarchiquement inférieure au troisième niveau) comprend quatre fois plus de cellule que le troisième niveau, soit 64 cellules [18] à [25], les cellules [18] à [21] correspondant par exemple à une subdivision de la cellule [12] du troisième niveau et les cellules [22] à [25] correspondant par exemple à une subdivision de la cellule [15] du troisième niveau. Un cinquième niveau de représentation spatiale du milieu 2 (non représentée sur les figures 2A et 2B) contiendrait ainsi quatre fois plus de cellules que le quatrième niveau, un sixième niveau de représentation spatiale du milieu 2 (non représentée sur les figures 2A et 2B) contiendrait ainsi quatre fois plus de cellules que le cinquième niveau et ainsi de suite.

Lorsque le milieu participant hétérogène 10 est un élément à trois dimensions, le milieu 2 est lui aussi un élément à trois dimensions et le milieu est subdivisé de manière hiérarchique en cellules de dimensions et donc de volume identiques pour former une structure de type « arbre octal » (de l'anglais « octree »). Les cellules de dimensions (et de volume) identiques formant le milieu 2 sont avantageusement appelées « voxels », un « voxel » correspondant à un élément de volume. Dans le cas d'un milieu 2 à trois dimensions, le premier niveau de subdivision spatiale (de position hiérarchique la plus élevée) comprend un unique « voxel » dont le volume est égal au volume du milieu 2. Le deuxième niveau de subdivision spatiale comprend 8 « voxels » de dimensions (et de volume) identiques ; le troisième niveau de subdivision spatiale en comprend 8 fois plus, soit 64 voxels ; le quatrième niveau de subdivision spatiale comprend 8 fois plus de « voxels » que le deuxième niveau, soit 512 volumes et ainsi de suite. Les points d'un même « voxel » possèdent des caractéristiques physiques identiques, c'est-à-dire qu'ils présentent le même coefficient d'absorption, le même coefficient de diffusion et la même densité, le volume à l'intérieur d'un « voxel » étant par conséquent homogène. De manière avantageuse, les caractéristiques physiques de points appartenant à un premier « voxel » sont différentes des caractéristiques physiques des points appartenant à un « voxel » voisin du premier « voxel », par exemple les points du premier « voxel » présentent une densité $D_1$ différente des points des « voxels » voisins. Selon une variante, les « voxels » du milieu 2 présentent des caractéristiques différentes les uns des autres. Selon une autre variante, certains « voxels » du milieu 2 présentent des caractéristiques physiques identiques. Le milieu 2 reste globalement hétérogène, même si certains des « voxels » qui le composent présentent des caractéristiques physiques, par exemple une densité $D_i$, identiques.

Dans le reste de la description, le terme « voxel » sera utilisé pour désigner un élément de subdivision spatiale du milieu 2, même si l'élément de subdivision spatiale est représenté par une cellule en deux dimensions pour des raisons de clarté des figures. Pour un élément à deux dimensions, le terme cellule sera à substituer au terme « voxel », le raisonnement décrit s'appliquant de manière identique à une cellule et à un « voxel ». Les valeurs de densité sont tout d'abord calculées selon toute méthode connue de l'homme du métier, par exemple à l'aide d'un logiciel de simulation de dynamique des fluides ou par une personne souhaitant créer un effet ou un rendu particulier pour le milieu 10, en tout point du milieu 10 pour représenter le milieu 10, cette valeur de densité étant appelée densité initiale d'un point. La valeur de densité assignée aux points appartenant à un « voxel » est ensuite calculée pour correspondre à la moyenne des densités initiales précédemment calculées de chacun des points constituant le « voxel ». Par exemple, pour le premier niveau de subdivision spatiale (le plus élevé hiérarchiquement) dans lequel il n'y a qu'un seul « voxel », la valeur de densité assignée à tous les points du « voxel » correspond à la valeur moyenne des densités initiales du milieu 2. Pour le deuxième niveau dans lequel le milieu 2 est subdivisé en 8 « voxels », la moyenne de la densité des points est calculée en faisant la moyenne des densités initiales des points appartenant à un « voxel », cette valeur moyenne est assignée à tous les points du « voxel » considéré et l'opération est réitérée pour les sept autres « voxels ». Le même raisonnement est appliqué pour chaque niveau de subdivision spatiale du milieu 2.

Faire la moyenne de la densité initiale des points d'un « voxel » pour assigner cette valeur moyenne à tous les points formant un « voxel » revient à introduire une erreur d'estimation de densité, l'erreur étant d'autant plus importante que la subdivision spatiale du milieu 2 est grossière, c'est-à-dire que l'erreur est d'autant plus grande que le nombre de « voxels » formant le milieu 2 est faible. L'erreur d'estimation de densité entre deux niveaux de subdivision spatiale hiérarchiquement consécutifs est calculée en utilisant par exemple la formule suivante :

$$D_{err} = \frac{1}{8} \sum_{i=1}^{8} (|D_{n+1,i} - D_n|) \qquad \text{Equation 8}$$

où $D_{err}$ représente l'erreur d'estimation de densité d'un niveau hiérarchique n par rapport au niveau hiérarchique inférieur (n+1),

$D_{n+1,i}$ représente la densité moyenne des points d'un « voxel » i d'un niveau hiérarchique (n+1) directement inférieur au niveau hiérarchique n,

Dn représente la densité moyenne des points du « voxel » représenté par un noeud d'un niveau n de subdivision spatiale qui se décompose en 8 « voxels » au niveau inférieur (n+1).

Pour rappel, l'atténuation de la lumière traversant un « voxel » est donnée par la formule suivante :

$$Att = exp \int_{x=x_{min}}^{x=x_{max}} -\sigma_t D(x) dx \qquad \text{Equation 9}$$

où $x_{min}$ et $x_{max}$ correspondent respectivement au premier point et au deuxième point d'intersection d'une direction (de diffusion ou d'émission de la lumière) avec le « voxel » considéré du niveau de subdivision spatial n,
D représente la densité.

En considérant l'erreur de densité calculée par la formule 8 par exemple, on en déduit les limites inférieure et supérieure de l'atténuation dans un « voxel » :

$$Att_{min} = exp \int_{x=x_{min}}^{x_{max}} -\sigma_t D(x)(1 - D_{err}) dx \qquad \text{Equation 10}$$

$$Att_{max} = exp \int_{x=x_{min}}^{x_{max}} -\sigma_t D(x)(1 + D_{err}) dx \qquad \text{Equation 11}$$

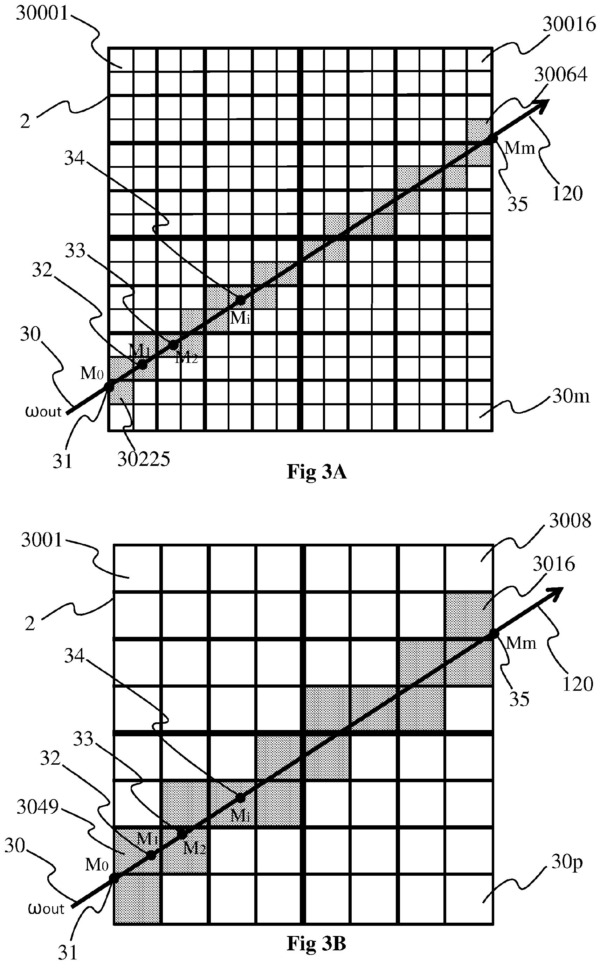

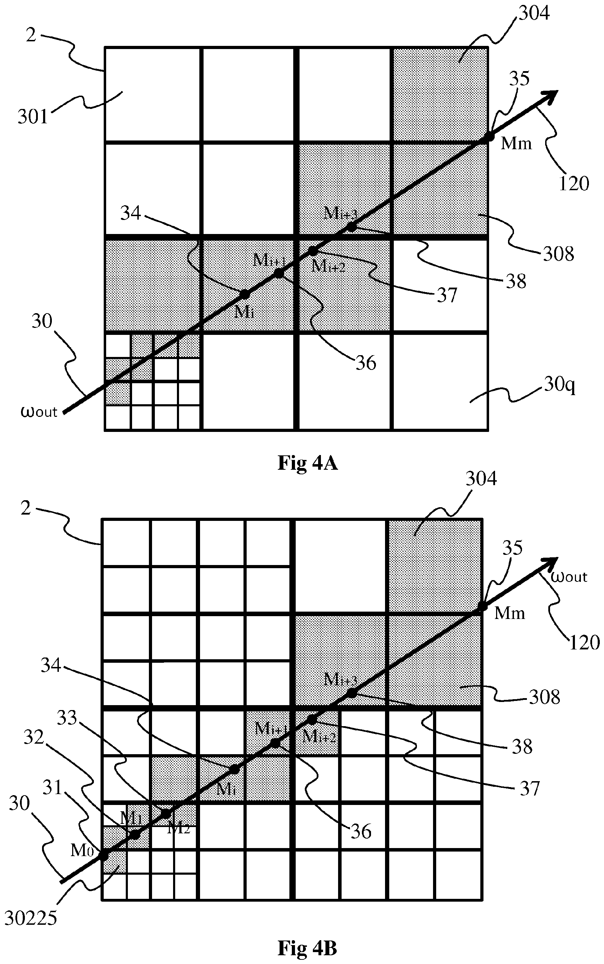

Les **figures 3A, 3B, 4A et 4B** illustrent plusieurs niveaux de subdivision spatiale d'un milieu 10 de la figure 1 selon une direction de diffusion de la lumière, selon un mode de réalisation particulier de l'invention. Les figures 3A, 3B, 4A et 4B illustrent également une méthode de sélection d'un niveau de subdivision spatiale du milieu 2 (représentant le milieu 10 selon une forme géométrique simple) le long d'une direction de diffusion de la lumière $\omega_{out}$ 120, selon un mode de réalisation particulier de l'invention.

La **figure 3A** est une représentation en deux dimensions du niveau de subdivision spatiale le plus bas du milieu 2, correspondant par exemple au niveau 24 ou à un niveau inférieur représenté sur la figure 2B. Le milieu 2 est composé de n « voxels » 30001 à 30n. Les « voxels » traversés par la direction de diffusion de la lumière $\omega_{out}$ 120, par exemple les « voxels » 30225 et 30064, apparaissent en grisé sur la figure 3A. La partie de la droite représentant la direction de diffusion de la lumière $\omega_{out}$ traversant le milieu 2 est échantillonnée en un ensemble de m points $M_0$ 31, $M_1$ 32, $M_2$ 33 ... $M_i$ 34 ... $M_m$ 35 pour l'estimation de l'atténuation de la lumière le long de cette direction de diffusion en utilisant la méthode dite d'échantillonnage de rayon.

La **figure 3B** est une représentation en deux dimensions du niveau de subdivision spatiale hiérarchiquement immédiatement supérieur au niveau de subdivision spatiale représenté sur la figure 3A, par exemple le niveau 23 si la figure 2A représente le niveau 24. Le milieu 2 ainsi représenté comprend p « voxels » 3001 à 30p, chaque « voxel » de la figure 2B correspondant à la fusion de 8 « voxels » de la figure 2A, ces 8 « voxels » étant reliés au « voxel » hiérarchiquement supérieur dans l'arbre octal représentant la structure arborescente des niveaux de subdivision spatiale du milieu 2. Les « voxels » traversés par la direction de diffusion $\omega_{out}$ 120, par exemple les « voxels » 3049 et 3016, apparaissent également grisés. Les éléments communs aux figures 3A et 3B possèdent les mêmes signes de référence, par exemple l'ensemble de m points $M_0$ 31, $M_1$ 32, $M_2$ 33 ... $M_i$ 34 ... $M_m$ 35 formant l'échantillonnage de la direction $\omega_{out}$ 120.

Pour choisir le niveau de subdivision spatiale formant le meilleur compromis vitesse de calcul/justesse de l'estimation de la quantité de lumière diffusée, c'est-à-dire le niveau de subdivision spatiale le plus élevé hiérarchiquement pour lequel l'erreur induite pour l'estimation de la quantité de lumière diffusée est acceptable en terme de rendu (c'est-à-dire par exemple non visible pour l'oeil humain), la quantité de lumière diffusée par le point $M_0$ 31 est estimée dans un premier temps en utilisant la méthode décrite en regard de la figure 1, c'est-à-dire en calculant l'atténuation de la lumière incidente au point $M_0$, avec le niveau de subdivision spatiale le plus bas hiérarchiquement, c'est à dire celui décrit en regard de la figure 2A. Cette valeur calculée forme la première valeur de référence de quantité de lumière diffusée. Dans un deuxième temps, la quantité de lumière diffusée par le point $M_1$ 32 est calculée selon la même méthode (après calcul de l'atténuation de la lumière incidente au point $M_1$) avec le niveau de subdivision spatiale le plus bas hiérarchiquement. On calcule alors à partir de cette valeur l'atténuation de la lumière entre $M_1$ et $M_0$ pour estimer la quantité de lumière diffusée totale par $M_1$ et $M_0$ au point $M_0$, la valeur d'atténuation dépendant de la densité et donc des « voxels » traversés, selon les équations 6 et 9. Dans un troisième temps, la quantité de lumière diffusée par le point $M_1$ 32 est calculée selon la même méthode avec le niveau de subdivision spatiale hiérarchiquement immédiatement supérieur au niveau le plus bas, c'est-à-dire le niveau représenté en regard de la figure 2B. On calcule alors à partir de cette valeur l'atténuation de la lumière entre $M_1$ et $M_0$ pour estimer la quantité de lumière diffusée totale par $M_1$ et $M_0$ au point $M_0$, cette valeur d'atténuation étant différente de celle calculée en deuxième temps puisque les « voxels » traversés entre $M_0$ et $M_1$ ne sont pas les mêmes d'un niveau de subdivision spatiale au niveau de subdivision spatiale consécutif hiérarchiquement supérieur. En comparant les valeurs de quantité de lumière totale diffusée par les points $M_1$ et $M_0$ au point $M_0$ pour les deux niveaux de subdivisions spatiales consécutifs, on obtient une valeur représentative d'une erreur liée à la différence de représentation du milieu 2 (c'est-à-dire par des niveaux de subdivision spatiale consécutifs différents). Cette valeur représentative de l'erreur est enfin comparée à une valeur seuil, cette valeur seuil étant par exemple représentative d'un défaut admissible car non visible pour l'oeil humain. Si l'erreur est inférieure à la valeur seuil, cela signifie que l'on choisit le niveau de subdivision spatiale le plus élevé car il est induit peu d'erreur pour l'estimation de la quantité de lumière diffusée tout en réduisant les calculs, les « voxels » étant de taille plus importante et la densité variant donc moins souvent dans le milieu 2, ce qui réduit les calculs d'atténuation de la lumière dont la complexité dépend directement de la variation de la densité.

Si l'erreur est supérieure à la valeur seuil, cela signifie que l'on sélectionne le niveau de subdivision spatiale de plus bas niveau, c'est à dire avec le plus de « voxels », car cela signifie que le niveau hiérarchiquement plus élevé entraîne une erreur trop importante, par exemple visible par l'oeil humain. Les mêmes calculs sont alors effectués pour le point suivant $M_2$ 33. La quantité de lumière diffusée par le point $M_2$ est calculée pour le niveau de subdivision spatiale le plus bas, puis l'atténuation de la lumière sur le chemin $M_2M_0$ est calculée pour estimer la quantité de lumière diffusée par $M_2$ au point $M_0$ pour le niveau de subdivision spatiale le plus bas. La valeur de référence à laquelle la quantité de lumière diffusée par $M_2$ au point $M_0$ est comparée est la quantité de lumière diffusée par les points situés en amont de $M_2$ sur la direction 120, à savoir les points $M_0$ et $M_1$. Puis la quantité de lumière diffusée par $M_2$ au point $M_0$ est estimée de la même manière pour le niveau de subdivision spatiale hiérarchiquement directement supérieur, à savoir celui représenté en figure 2B. Cette quantité de lumière est à son tour comparée à la référence constituée par la quantité de lumière diffusée par les points $M_0$ et $M_1$ pour le niveau de subdivision spatiale le plus bas, à savoir celui de la figure 2A. En comparant la quantité de lumière diffusée par M2 à la quantité de lumière diffusée par M0 et M1 pour deux niveaux de subdivision spatiale consécutifs, une erreur d'estimation représentative d'une différence d'atténuation estimée pour chacun des deux niveaux est déterminée. Si cette erreur est inférieure à la valeur seuil, cela signifie que le niveau de subdivision le plus élevé est suffisant pour une bonne estimation. Sinon, si cette erreur est supérieure à la valeur seuil, le niveau de subdivision le plus élevé est insuffisant et il convient de conserver le niveau de subdivision le plus fin, à savoir le moins élevé des deux hiérarchiquement et les mêmes opérations sont à effectuer pour le point suivant $M_i$ 34.

Si le niveau de subdivision le moins fin est suffisant pour $M_i$, alors il est suffisant pour tous les points situés en aval de $M_i$ sur la direction de diffusion jusqu'à $M_m$. En effet, plus on s'enfonce dans le milieu 2, plus l'atténuation de la lumière diffusée par les points est importante et moins la quantité de lumière diffusée par ces points est importante par rapport à la quantité de lumière totale diffusée en $M_0$. Si l'erreur est admissible pour un point $M_i$, elle est donc aussi a fortiori admissible pour un point $M_{i+1}$ situé en aval vers $M_m$. Ceci est représenté en **figure 4B** dans laquelle on voit que pour les points M0 à M2, le niveau hiérarchique le plus bas est sélectionné alors que pour les points suivants des niveaux hiérarchiques plus élevés sont choisis. Si pour Mi le niveau hiérarchiquement immédiatement supérieur au niveau le plus bas est suffisant pour obtenir une estimation de quantité de lumière diffusée avec une marge d'erreur acceptable, la question se pose de savoir si le niveau consécutif hiérarchiquement plus élevé est lui aussi suffisant. C'est ce qui est illustré par la **figure 4A.** Pour les points $M_i$ 34 puis $M_{i+1}$ 36 puis $M_{i+2}$ 37 puis $M_{i+3}$ 38, la quantité de lumière diffusée par le point considéré au point M0 pour le niveau de subdivision représentée en figure 3B est comparée à la quantité de lumière diffusée par les points situés en amont avec le niveau de subdivision sélectionné pour ces points. Puis pour ces mêmes points, l'un après l'autre, la quantité de lumière diffusée par ces points au point $M_0$ pour un niveau de subdivision consécutif plus élevé, par exemple le niveau 22 (si le niveau 23 est représenté en figure 2B) est elle aussi comparée à la même valeur de référence représentant la quantité de lumière diffusée au point $M_0$ par les points amonts. Une information d'erreur représentative de la différence d'atténuation de la lumière entre les deux niveaux de subdivision consécutifs en est déduite. Pour les points pour lesquels cette erreur est supérieure à une valeur seuil, cela signifie que le niveau de subdivision le plus élevé des deux est insuffisant pour une estimation correcte de la quantité de lumière diffusée. Lorsque pour un point cette erreur est inférieure à une valeur seuil, alors en ce point le niveau de subdivision le plus élevé est suffisant et il sera sélectionné car moins coûteux en terme de puissance et/ou temps de calcul nécessaire pour l'estimation de l'atténuation de la lumière, les variations de densité d'un point à un autre étant moins nombreuses que pour un niveau de subdivision de plus bas niveau hiérarchiquement. Pour les points suivant ce dernier point (c'est-à-dire le premier point pour lequel l'erreur est inférieure à la valeur seuil), le niveau de subdivision le plus élevé sera également suffisant et il se pose alors la question de savoir si un niveau de subdivision hiérarchiquement plus élevé ne serait pas lui aussi suffisant, et ce jusqu'à arriver au point $M_m$ 35 en limite du milieu 2 sur la direction $\omega_{out}$ 120.

On arrive de cette façon à la représentation de la figure 4B où le niveau de subdivision spatiale est d'autant plus élevé hiérarchiquement que l'on s'enfonce dans le milieu 2 le long de la direction $\omega_{out}$ 120 en allant vers $M_m$ 35. Le meilleur compromis entre puissance de calcul nécessaire et qualité de l'estimation de la quantité de lumière diffusée le long d'une direction de diffusion est ainsi trouvé.

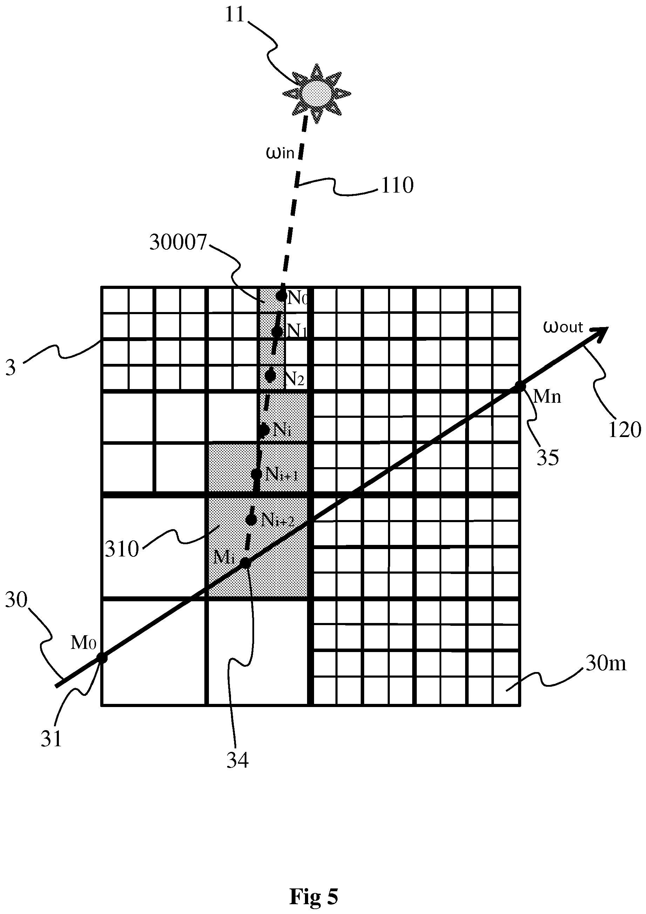

La **figure 5** illustre le milieu 2 représentatif du milieu participant hétérogène 10 avec plusieurs niveaux de subdivision spatiale le long d'une direction de lumière incidente $\omega_{in}$ 110, selon un mode de réalisation particulier de l'invention. Comme cela a été décrit en regard des figures 3A, 3B, 4A et 4B, la quantité de lumière émise par le milieu 2 le long de la direction de diffusion (dite également direction d'observation) $\omega_{out}$ 120 est réalisée en utilisant la méthode dite d'échantillonnage de rayon. Pour calculer la quantité de lumière diffusée par un point de la direction de diffusion

$\omega_{out}$ 120, par exemple le point $M_i$ 34, il est nécessaire au préalable d'estimer l'atténuation de la lumière incidente en ce point $M_i$ 34. L'estimation de l'atténuation de la lumière incidente en un point $M_i$ est également réalisée en utilisant la méthode d'échantillonnage de rayon et le même raisonnement que celui décrit en regard des figures 3A, 3B, 4A et 4B est appliqué pour sélectionner les niveaux de subdivision spatiale optimaux le long de la direction de lumière incidente $\omega_{in}$ 110. Dans un premier temps, le niveau de subdivision spatial le plus fin, c'est-à-dire le plus bas hiérarchiquement, est appliqué au milieu 2 le long de la direction $\omega_{in}$ 110 et l'atténuation de la lumière au point $M_i$ le long de la direction $\omega_{in}$ 110 est estimée en utilisant la méthode d'échantillonnage de rayon telle que décrite en regard de la figure 1. Cette valeur d'atténuation représente une première valeur de référence. Puis l'atténuation de la lumière au point $N_0$ est estimée pour le niveau de subdivision spatiale le plus bas hiérarchiquement puis pour le niveau directement supérieur au niveau le plus bas. Ces valeurs sont comparées à la valeur de référence, c'est-à-dire que l'on extrait de ces valeurs la part qu'elles représentent dans l'atténuation totale au point $M_i$, et l'erreur d'estimation de l'atténuation au point $N_0$ en est déduite. Si cette erreur est inférieure à une deuxième valeur seuil, alors le niveau de subdivision spatiale le plus élevé des deux (c'est-à-dire avec le moins de « voxels ») est considéré comme étant suffisant pour une estimation de l'atténuation de la lumière de bonne qualité. Si cette erreur est supérieure à la deuxième valeur seuil, alors le niveau de subdivision spatiale le plus élevé n'est pas sélectionné car entraînant une estimation trop approximative de l'atténuation au point $N_0$. Les mêmes opérations sont alors réalisées successivement sur le point $N_1$ puis $N_2$ puis $N_i$ jusqu'à arriver au point $N_i$ pour lequel le niveau de subdivision spatiale le plus élevé des deux est suffisant car entraînant une erreur d'estimation de l'atténuation en ce point (ou plus précisément la part de l'atténuation en ce point par rapport à l'atténuation totale au point $M_i$) inférieure à la deuxième valeur seuil lorsqu'elle est comparée à une estimation faite pour une subdivision spatiale plus fine. Pour les points N0 à N2, la subdivision spatiale de plus bas niveau est sélectionnée et pour les points Ni et suivant, jusqu'à Mi, l'atténuation de la lumière incidente est de nouveau estimée pour deux niveaux de subdivision spatiale hiérarchiquement consécutifs en remontant dans l'arbre octal de représentation des niveaux de subdivision spatiale pour déterminer quel est le niveau de subdivision spatiale offrant le meilleur compromis entre diminution des calculs nécessaires et exactitude de l'estimation de l'atténuation de la lumière incidente par comparaison avec une deuxième valeur seuil. On arrive finalement à appliquer un niveau de subdivision spatiale le plus fin pour les premiers points de la direction d'incidence $N_0$ à $N_2$, puis un deuxième niveau de subdivision spatiale directement supérieur au niveau le plus bas d'un point de vue hiérarchique pour les points suivants, à savoir les points $N_i$ et $N_{i+1}$, puis un troisième niveau de subdivision spatiale directement supérieur au deuxième niveau pour les points suivants le point $N_{i+1}$ jusqu'au point $M_i$.

La sélection de plusieurs niveaux de subdivision spatiale le long de la direction de lumière incidente $\omega_{in}$ 110 offre l'avantage de conserver une estimation de l'atténuation totale de la lumière au point Mi avec une erreur minimale, inférieur à une troisième valeur seuil par exemple, tout en minimisant les calculs en diminuant de façon optimale le nombre de « voxels » traversés par le rayon incident $\omega_{in}$ 110, ce qui revient à réduire le nombre de points pour lesquels la densité varie, la complexité des calculs étant directement liée aux variations de densité d'un point à un autre.

De manière avantageuse, le milieu 2 est éclairé par plus d'une source lumineuse 11. Chaque point Mi de la direction de diffusion $\omega_{out}$ 120 reçoit ainsi plusieurs rayons incidents et la quantité de lumière reçue par le point $M_i$ correspond à la somme des quantités de lumière incidente élémentaires reçues (c'est-à-dire pour chaque rayon de lumière incidente). Pour estimer l'atténuation de la lumière au point $M_i$, les opérations décrites ci-dessus sont réitérées pour chaque direction de lumière incidente.

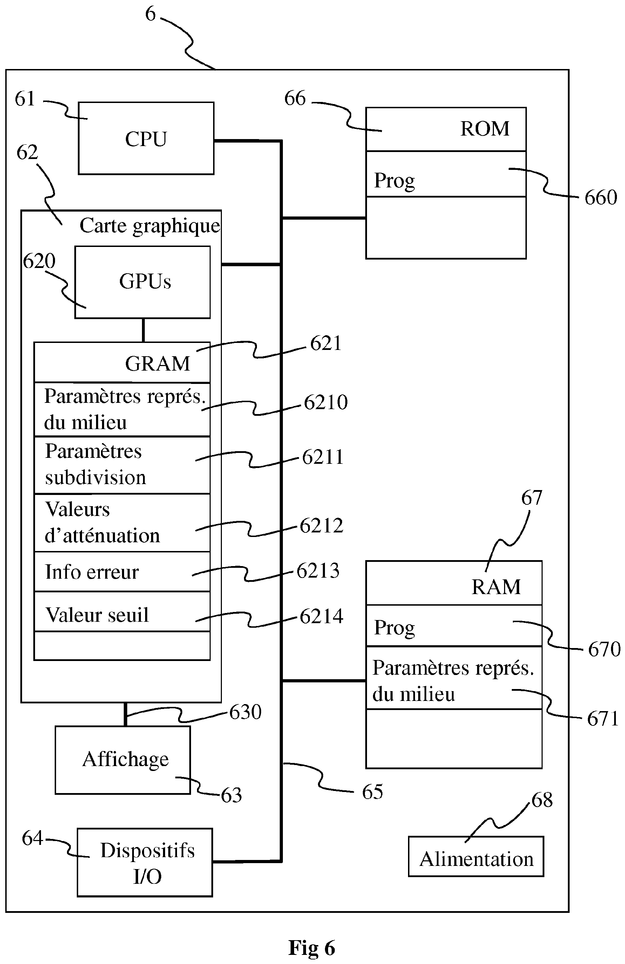

La **figure 6** illustre schématiquement un exemple de réalisation matérielle d'un dispositif 6 adapté à l'estimation de la quantité de lumière diffusée par un milieu participant hétérogène 10 et à la création de signaux d'affichage d'une ou plusieurs images. Le dispositif 6 correspondant par exemple à un ordinateur personnel PC, à un ordinateur portable (de l'anglais « laptop ») ou à une console de jeux.

Le dispositif 6 comprend les éléments suivants, reliés entre eux par un bus 65 d'adresses et de données qui transporte également un signal d'horloge :

- un microprocesseur 61 (ou CPU) ;
- une carte graphique 62 comprenant :

  • plusieurs processeurs de traitement graphique 620 (ou GPUs) ;
  • une mémoire vive de type GRAM (de l'anglais « Graphical Random Access Memory ») 621 ;

- une mémoire non volatile de type ROM (de l'anglais « Read Only Memory ») 66 ;
- une mémoire vive ou RAM (de l'anglais « Random Access Memory ») 67 ;
- un ou plusieurs dispositifs I/O (de l'anglais « Input/Output » ou en français « Entrée/Sortie ») 64, tels que par exemple un clavier, une souris, une webcam ; et
- une alimentation 68.

Le dispositif 6 comprend également un dispositif d'affichage 63 de type écran d'affichage relié directement à la carte graphique 62 pour afficher notamment le rendu d'images de synthèse calculées et composées dans la carte graphique, par exemple en temps réel. L'utilisation d'un bus dédié pour relier le dispositif d'affichage 63 à la carte graphique 62 offre l'avantage d'avoir des débits de transmission de données beaucoup plus important et ainsi de diminuer le temps de latence pour l'affichage d'images composées par la carte graphique. Selon une variante, un appareil pour afficher est externe au dispositif 6 et est relié au dispositif 6 par un câble transmettant les signaux d'affichage. Le dispositif 6, par exemple la carte graphique 62, comprend un moyen de transmission ou connecteur (non représenté sur la figure 6) adapté à transmettre un signal d'affichage à un moyen d'affichage externe tel que par exemple un écran LCD ou plasma, un vidéoprojecteur.

On observe que le mot « registre » utilisé dans la description des mémoires 62, 66 et 67 désigne dans chacune des mémoires mentionnées, aussi bien une zone de mémoire de faible capacité (quelques données binaires) qu'une zone mémoire de grande capacité (permettant de stocker un programme entier ou tout ou partie des données représentatives de données calculées ou à afficher).

A la mise sous tension, le microprocesseur 61 charge et exécute les instructions du programme contenu dans la RAM 67.

La mémoire vive 67 comprend notamment :

- dans un registre 670, le programme de fonctionnement du microprocesseur 61 chargé à la mise sous tension du dispositif 6 ;
- des paramètres 671 représentatifs du milieu participant hétérogène 10 (par exemple paramètres de densité, de coefficients d'absorption de la lumière, de coefficients de diffusion de la lumière).

Les algorithmes mettant en oeuvre les étapes du procédé propres à l'invention et décrits ci-après sont stockés dans la mémoire GRAM 67 de la carte graphique 62 associée au dispositif 6 mettant en oeuvre ces étapes. A la mise sous tension et une fois les paramètres 670 représentatifs du milieu chargés en RAM 67, les processeurs graphiques 620 de la carte graphique 62 chargent ces paramètres en GRAM 621 et exécutent les instructions de ces algorithmes sous la forme de microprogrammes du type « shader » utilisant le langage HLSL (de l'anglais « High Level Shader Language » ou en français « Langage de programmation « shader » de haut niveau »), le langage GLSL (de l'anglais « OpenGL Shading language » ou en français « Langage de shaders OpenGL ») par exemple.

La mémoire vive GRAM 621 comprend notamment :

- dans un registre 6210, les paramètres représentatifs du milieu 10 ;
- des paramètres de subdivision spatiale 6211 représentatifs des différents niveaux de subdivision spatiale du milieu 2 ;
- des valeurs d'atténuation d'intensité lumineuse 6212 pour un ensemble de points du milieu 2, 10 ;
- des informations d'erreur 6213 représentatives de différence d'atténuation de lumière entre deux niveaux de subdivision spatiale hiérarchiquement consécutifs ; et
- une ou plusieurs valeurs seuils 6214.

Selon une variante, une partie de la RAM 67 est allouée par le CPU 61 pour stocker les paramètres 6211, les valeurs 6212 et 6214 et les informations d'erreur 6213 si l'espace mémoire disponible en GRAM 621 est insuffisant. Cette variante entraîne cependant des temps de latence plus important dans la composition d'une image comprenant une représentation du milieu 2, 10 composée à partir des microprogrammes contenus dans les GPUs puisque les données doivent être transmises de la carte graphique à la mémoire vive 67 en passant par le bus 65 dont les capacités de transmission sont généralement inférieures à celles disponibles dans la carte graphique pour faire passer les données des GPUs à la GRAM et vice-versa.

Selon une autre variante, l'alimentation 68 est externe au dispositif 6.

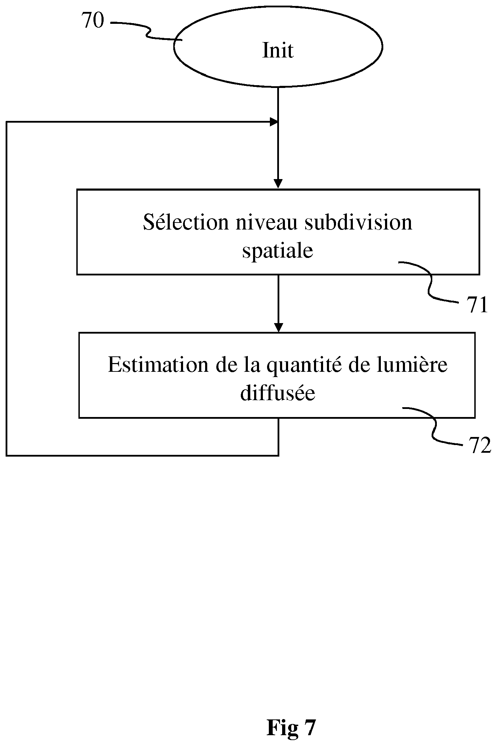

La **figure 7** illustre un procédé d'estimation de la quantité de lumière diffusée par un milieu participant hétérogène 10 mis en oeuvre dans un dispositif 6, selon un exemple de mise en oeuvre non limitatif particulièrement avantageux de l'invention.

Au cours d'une étape d'initialisation 70, les différents paramètres du dispositif 6 sont mis à jour. En particulier, les paramètres représentatifs du milieu participant hétérogène 10 sont initialisés d'une manière quelconque.

Ensuite, au cours d'une étape 71, un ou plusieurs niveaux de subdivision spatiale du milieu 2 représentant le milieu 10 sont sélectionnées le long d'une ou plusieurs directions de diffusion $\omega_{out}$ 120 (dites également directions d'observation) et/ou le long d'une ou plusieurs directions de lumière incidente (dites également direction d'émission de la lumière) $\omega_{in}$ 110. Ce ou ces niveaux de subdivision sont sélectionnés parmi une pluralité de niveaux de subdivision spatiale 21 à 24 ordonnés hiérarchiquement dans un arbre octal (ou un arbre quaternaire pour un milieu 2 à deux dimensions) en fonction d'une ou plusieurs informations d'erreur représentatives d'une différence d'atténuation de la lumière dans le milieu 2 entre deux niveaux de subdivision spatiale consécutifs hiérarchiquement. Le long d'une direction de diffusion de la lumière $\omega_{out}$, une valeur représentative de l'atténuation de la lumière diffusée par le point d'intersection entre le milieu 2 et la direction $\omega_{out}$ est estimée pour le niveau de subdivision spatiale du milieu 2 le plus bas hiérarchiquement (c'est-à-dire le niveau de représentation le plus fin du milieu, c'est-à-dire celui comprenant le plus grand nombre de « voxels »), cette valeur servant de valeur de référence. Puis une première valeur représentative de l'atténuation de la lumière diffusée par le premier point d'un ensemble de points de la direction, cet ensemble de point correspondant à un échantillonnage de la direction de diffusion réalisée pour l'application de la méthode d'échantillonnage de rayon (de l'anglais « ray-marching process »), est estimée pour le niveau de subdivision spatiale le plus bas. Puis, pour le même premier point, une autre estimation d'une valeur représentative de l'atténuation de lumière diffusée est estimée pour le niveau de subdivision spatiale hiérarchiquement directement supérieur au niveau le plus bas. Ces deux premières valeurs sont comparées à la valeur de référence pour déterminer la part (de chacune de ces deux premières valeurs) de l'atténuation de la lumière de ce premier point dans l'atténuation totale au point d'intersection du milieu et de la direction $\omega_{out}$. En comparant ces deux parts dans la totalité de l'atténuation de la lumière diffusée, il est ainsi possible d'en déduire une information d'erreur représentant l'erreur induite par le niveau de subdivision spatiale le plus élevé des deux (le moins fin des deux car comprenant moins de « voxels ») dans le calcul de l'atténuation de la lumière diffusée. En fonction de cette erreur, le niveau de subdivision spatiale adaptée, c'est-à-dire induisant une erreur admissible, par exemple non visible pour l'oeil humain, pour le premier point est sélectionné. Ces opérations sont réitérées point par point pour chaque point d'échantillonnage de la direction de diffusion en s'enfonçant dans le milieu 2 dans la direction d'observation. Si pour un point donné le niveau de subdivision spatiale le plus élevé des deux est suffisant, alors le niveau est jugé suffisant pour tous les points suivants. A partir de ce point donné, l'atténuation est estimée pour le niveau directement supérieur au niveau le plus bas et pour le niveau directement supérieur à ce dernier pour estimer l'erreur qui serait induite par le niveau le plus élevé. Ces opérations sont réitérées pour tous les points d'échantillonnage de la direction d'observation $\omega_{out}$ jusqu'à atteindre la limite de fin du milieu 2. Plusieurs niveaux de subdivision spatiale sont avantageusement sélectionnés le long d'une direction de diffusion de la lumière par le milieu 2. Le même raisonnement est appliqué aux points d'échantillonnage d'une direction de lumière incidente, pour lesquels des deuxièmes valeurs représentatives de l'atténuation de la lumière reçue d'une source de lumière sont estimées pour deux niveaux de subdivision hiérarchiquement consécutifs, pour sélectionner les niveaux de subdivision spatiale le long de la direction de lumière incidente pour lesquels les erreurs induites sont jugées acceptables.

Selon une variante, l'information d'erreur, dite première information d'erreur, issue de la comparaison des premières valeurs représentatives de l'atténuation de la lumière diffusée par un point d'échantillonnage de la direction de diffusion est comparée à une première valeur seuil, au cours d'une étape de comparaison non représentée sur la figure 7, pour sélectionner l'un ou l'autre des deux niveaux de subdivision spatiale hiérarchiquement consécutifs pour lesquels ont été calculées les deux premières valeurs d'atténuation de lumière diffusée. Si la première information d'erreur est inférieure à la première valeur seuil, le niveau de subdivision spatiale de position hiérarchique la plus élevée est sélectionné, cela signifiant que le niveau le plus élevé entraîne une erreur acceptable dans l'estimation de l'atténuation de la lumière alors que les coûts de calcul sont inférieurs à ceux engendrés pour un niveau de position inférieure, un niveau de position inférieure présentant plus de « voxels » dans le milieu et donc plus de variation de caractéristiques physiques, notamment de densité, du milieu 2. Si la première information d'erreur est supérieure à la première valeur seuil, le niveau de subdivision spatiale de position hiérarchique la plus basse est sélectionné, cela signifiant que le niveau le plus élevé entraîne une erreur non acceptable, par exemple visible par l'oeil humain, dans l'estimation de l'atténuation de la lumière.

Selon une autre variante, l'information d'erreur, dite deuxième information d'erreur, issue de la comparaison des deuxièmes valeurs représentatives de l'atténuation de la lumière reçue d'une source de lumière en un point d'échantillonnage de la direction de lumière incidente est comparée à une deuxième valeur seuil, au cours d'une étape de comparaison non représentée sur la figure 7, pour sélectionner l'un ou l'autre des deux niveaux de subdivision spatiale hiérarchiquement consécutifs pour lesquels ont été calculées les deux deuxièmes valeurs d'atténuation de lumière diffusée. Si la deuxième information d'erreur est inférieure à la deuxième valeur seuil, le niveau de subdivision spatiale de position hiérarchique la plus élevée est sélectionné, cela signifiant que le niveau le plus élevé entraîne une erreur acceptable dans l'estimation de l'atténuation de la lumière reçue alors que les coûts de calcul sont inférieures à ceux engendrés pour un niveau de position inférieure, un niveau de position inférieure présentant plus de « voxels » dans le milieu et donc plus de variation de caractéristiques physiques, notamment de densité, du milieu 2. Si la deuxième information d'erreur est supérieure à la deuxième valeur seuil, le niveau de subdivision spatiale de position hiérarchique la plus basse est sélectionné, cela signifiant que le niveau le plus élevé entraîne une erreur non acceptable, par exemple visible par l'oeil humain, dans l'estimation de l'atténuation de la lumière reçue.

De manière avantageuse, les première et deuxième informations d'erreur ont des valeurs différentes. Selon une variante, les première et deuxième informations d'erreur sont de même valeur. Selon une autre variante, la première (respectivement deuxième) information d'erreur change de valeur en fonction des niveaux de subdivision spatiale qui sont comparés.

Puis au cours d'une étape 72, la quantité de lumière diffusée par le milieu 2 est estimée en utilisant une méthode d'échantillonnage, avantageusement une méthode d'échantillonnage de rayon. De manière avantageuse, l'échantillonnage est choisi de manière à ce qu'il y ait un point d'échantillonnage par « voxel » le long de la direction de diffusion. Selon une variante, l'échantillonnage est choisi de manière à être plus fin lorsque le niveau de subdivision est le plus fin et plus grossier au fur et à mesure que le niveau de subdivision est élevé hiérarchiquement. Selon une autre variante, l'échantillonnage est régulier, c'est-à-dire que les points d'échantillonnage sont régulièrement espacés. Cette dernière variante n'est pas non plus très coûteuse en terme de calcul puisque la densité ne varie pas d'un point à un autre d'un même « voxel ».

Les étapes 71 et 72 sont avantageusement réitérées au fur et à mesure qu'un spectateur 12 se déplace autour du milieu 10, l'image formant le rendu du milieu 10 étant recomposée pour chaque déplacement élémentaire du spectateur 12 autour du milieu 10. Selon une variante, les étapes 71 et 72 sont réitérées lorsque les conditions du milieu environnant, notamment la ou les sources de lumière, changent.

Bien entendu, l'invention ne se limite pas aux modes de réalisation décrits précédemment.

En particulier, l'invention n'est pas limitée à un procédé d'estimation de la quantité de lumière diffusée par un milieu participant hétérogène mais s'étend également à tout dispositif mettant en oeuvre ce procédé et notamment tous les dispositifs comprenant au moins un GPU. La mise en oeuvre des équations décrites en regards des figures 1 à 5 pour l'estimation des réductions d'intensité lumineuse dans les directions d'incidence et d'émission, de la quantité de lumière diffusée n'est pas non plus limitée à une mise en oeuvre dans des microprogrammes de type shader mais s'étend également à une mise en oeuvre dans tout type de programme, par exemple des programmes exécutables par un microprocesseur de type CPU.

L'utilisation de l'invention n'est pas limitée à une utilisation temps réel mais s'étend également à toute autre utilisation, par exemple pour les traitements dits de postproduction en studio d'enregistrement pour le rendu d'images de synthèse par exemple. La mise en oeuvre de l'invention en postproduction offre l'avantage de fournir un excellent rendu visuel en termes de réalisme notamment tout en diminuant les temps de calcul nécessaires.

L'invention concerne également un procédé de composition d'une image vidéo, en deux dimensions ou en trois dimensions, pour lequel la quantité de lumière diffusée par un milieu participant hétérogène est calculée et l'information représentative de la luminance qui en découle est utilisée pour l'affichage des pixels de l'image, chaque pixel correspondant à une direction d'observation selon une direction d'observation $\omega_{out}$. La valeur de luminance calculée pour affichage par chacun des pixels de l'image est recalculée pour s'adapter aux différents points de vue du spectateur.

L'invention concerne également un procédé de sélection d'un ou plusieurs niveaux de subdivision spatiale représentatifs d'un milieu participant hétérogène.

La présente invention peut être utilisée dans des applications de jeux vidéo par exemple, que ce soit par des programmes exécutables dans un ordinateur de type PC ou portable ou dans des consoles de jeux spécialisées produisant et affichant des images en temps réel. Le dispositif 6 décrit en regard de la figure 6 est avantageusement doté de moyens d'interactions tels que clavier et/ou manette de jeux, d'autres modes d'introduction de commandes telle que par exemple la reconnaissance vocale étant également possibles.

## Revendications

1. Procédé d'estimation de la quantité de lumière diffusée par un milieu participant hétérogène (10), **caractérisé en ce que** le procédé comprend les étapes de :

   - sélection (71) d'au moins un niveau de subdivision spatiale dudit milieu (10) parmi une pluralité de niveaux (21, 22, 23, 24) hiérarchiques de subdivision spatiale selon au moins une information d'erreur représentative d'une différence d'atténuation de la lumière dans ledit milieu selon au moins une direction (110, 120) entre deux niveaux hiérarchiques consécutifs, ladite sélection comprenant une comparaison de ladite information d'erreur à une valeur seuil, le niveau de subdivision spatiale sélectionné correspondant au niveau de position hiérarchique le plus élevé et de subdivision moins fine si ladite au moins une information d'erreur est inférieure à ladite valeur seuil, et
   la au moins une direction (110, 120) étant échantillonnée en un ensemble d'échantillons, un premier niveau de subdivision spatiale étant sélectionné et associé à au moins un premier échantillon (31, 32, 33) dudit ensemble, pour tous les autres échantillons dudit ensemble situés en aval du premier échantillon dans ladite direction, le niveau de subdivision spatiale sélectionné est hiérarchiquement supérieur ou égal au premier niveau de subdivision spatiale;
   - estimation (72) de la quantité de lumière diffusée par échantillonnage dudit milieu (10) le long d'au moins une direction de diffusion (120), l'échantillonnage étant fonction du au moins un niveau de subdivision spatiale sélectionné.

**2.** Procédé selon la revendication 1, **caractérisé en ce que** le procédé comprend une étape d'estimation d'au moins une première valeur représentative de l'atténuation de la lumière diffusée par au moins un point dudit milieu situé le long de ladite au moins une direction de diffusion.

**3.** Procédé selon la revendication 2, **caractérisé en ce que** le procédé comprend une étape d'estimation d'au moins une deuxième valeur représentative de l'atténuation de la lumière reçue d'au moins une source lumineuse selon au moins une direction d'émission de la lumière en ledit au moins un point situé le long de ladite au moins une direction de diffusion.

**4.** Procédé selon la revendication 2, **caractérisé en ce que** la au moins une information d'erreur est déterminée par comparaison de deux premières valeurs, lesdites deux premières valeurs étant estimées respectivement pour deux niveaux de subdivision spatiale hiérarchiques consécutifs dudit milieu.

**5.** Procédé selon la revendication 3, **caractérisé en ce que** la au moins une information d'erreur est déterminée par comparaison de deux deuxièmes valeurs, lesdites deux deuxièmes valeurs étant estimées respectivement pour deux niveaux de subdivision spatiale hiérarchiques consécutifs dudit milieu.

**6.** Dispositif configuré pour l'estimation de la quantité de lumière diffusée par un milieu participant hétérogène (10), **caractérisé en ce que** le dispositif comprend :

- des moyens pour sélectionner au moins un niveau de subdivision spatiale dudit milieu (10) parmi une pluralité de niveaux (21, 22, 23, 24) hiérarchiques de subdivision spatiale selon au moins une information d'erreur représentative d'une différence d'atténuation de la lumière dans ledit milieu selon au moins une direction (110, 120) entre deux niveaux hiérarchiques consécutifs, ladite sélection comprenant une comparaison de ladite information d'erreur à une valeur seuil, le niveau de subdivision spatiale sélectionné correspondant au niveau de position hiérarchique le plus élevé et de subdivision moins fine si ladite au moins une information d'erreur est inférieure à ladite valeur seuil, et la au moins une direction (110, 120) étant échantillonnée en un ensemble d'échantillons, un premier niveau de subdivision spatiale étant sélectionné et associé à au moins un premier échantillon (31, 32, 33) dudit ensemble, pour tous les autres échantillons dudit ensemble situés en aval du premier échantillon dans ladite direction, le niveau de subdivision spatiale sélectionné est hiérarchiquement supérieur ou égal au premier niveau de subdivision spatiale ;
- des moyens pour estimer la quantité de lumière diffusée par échantillonnage dudit milieu (10) le long d'au moins une direction de diffusion (120), l'échantillonnage étant fonction du au moins un niveau de subdivision spatiale sélectionné.

**7.** Produit programme d'ordinateur, **caractérisé en ce qu'**il comprend des instructions de code de programme pour exécuter les étapes du procédé selon l'une des revendications 1 à 5, lorsque ledit programme est exécuté sur un ordinateur.

**Patentansprüche**

**1.** Verfahren zur Schätzung der Menge von durch ein heterogenes beteiligtes Milieu (10) gestreutem Licht, **dadurch gekennzeichnet, dass** das Verfahren die Schritte umfasst zur:

- Auswahl (71) von mindestens einer Ebene räumlicher Unterteilung des besagten Milieus (10) aus einer Vielzahl von hierarchischen Ebenen (21, 22, 23, 24) räumlicher Unterteilung nach mindestens einer repräsentativen Fehlerinformation eines Abschwächungsunterschieds des Lichts in dem besagten Milieu in wenigstens einer Richtung (110, 120) zwischen zwei aufeinanderfolgenden hierarchischen Ebenen, wobei die besagte Auswahl einen Vergleich der besagten Fehlerinformation mit einem Schwellenwert umfasst, wobei die ausgewählte Ebene räumlicher Unterteilung der höchsten hierarchischen Positionsebene und von weniger feiner Unterteilung entspricht, wenn die besagte mindestens eine Fehlerinformation geringer als der besagte Schwellenwert ist, und wobei die wenigstens eine Richtung (110, 120) in einem Satz von Abtastwerten abgetastet wird, wobei eine erste Ebene räumlicher Unterteilung ausgewählt und mindestens einem ersten Abtastwert (31, 32, 33) des besagten Satzes zugeordnet wird, für alle anderen Abtastwerte des besagten Satzes, die dem ersten Abtastwert in der besagten Richtung nachgelagert sind, die ausgewählte Ebene räumlicher Unterteilung hierarchisch höher oder gleich der ersten Ebene räumlicher Unterteilung ist,
- Schätzung (72) der Menge an gestreutem Licht durch Abtastung des besagten Milieus (10) entlang wenigstens einer Streurichtung (120), wobei die Abtastung von der mindestens einen ausgewählten Ebene räumlicher Unterteilung abhängt.

2. Verfahren nach Anspruch 1, **dadurch gekennzeichnet, dass** das Verfahren einen Schritt zur Schätzung von mindestens einem ersten repräsentativen Wert der Abschwächung des gestreuten Lichts durch mindestens einen Punkt des besagten Milieus, der entlang der besagten wenigstens einen Streurichtung gelegen ist, umfasst.

3. Verfahren nach Anspruch 2, **dadurch gekennzeichnet, dass** das Verfahren einen Schritt zur Schätzung von mindestens einem zweiten repräsentativen Wert der Abschwächung des von mindestens einer Lichtquelle erhaltenen Lichts in wenigstens einer Emissionsrichtung des Lichts an dem besagten mindestens einen Punkt, der entlang der besagten wenigstens einen Streurichtung gelegen ist, umfasst.

4. Verfahren nach Anspruch 2, **dadurch gekennzeichnet, dass** die mindestens eine Fehlerinformation bestimmt wird durch Vergleich von zwei ersten Werten, wobei die besagten zwei ersten Werte jeweils für zwei aufeinanderfolgende hierarchische Ebenen räumlicher Unterteilung des besagten Milieus geschätzt werden.

5. Verfahren nach Anspruch 3, **dadurch gekennzeichnet, dass** die mindestens eine Fehlerinformation bestimmt wird durch Vergleich von zwei zweiten Werten, wobei die besagten zwei zweiten Werte jeweils für zwei aufeinanderfolgende hierarchische Ebenen räumlicher Unterteilung des besagten Milieus geschätzt werden.

6. Vorrichtung, konfiguriert für die Schätzung der Menge von durch ein heterogenes beteiligtes Milieu (10) gestreutem Licht, **dadurch gekennzeichnet, dass** die Vorrichtung umfasst:

   - Mittel zur Auswahl von mindestens einer Ebene räumlicher Unterteilung des besagten Milieus (10) aus einer Vielzahl von hierarchischen Ebenen (21, 22, 23, 24) räumlicher Unterteilung nach mindestens einer repräsentativen Fehlerinformation eines Abschwächungsunterschieds des Lichts in dem besagten Milieu in wenigstens einer Richtung (110, 120) zwischen zwei aufeinanderfolgenden hierarchischen Ebenen, wobei die besagte Auswahl einen Vergleich der besagten Fehlerinformation mit einem Schwellenwert umfasst, wobei die ausgewählte Ebene räumlicher Unterteilung der höchsten hierarchischen Positionsebene und von weniger feiner Unterteilung entspricht, wenn die besagte mindestens eine Fehlerinformation geringer als der besagte Schwellenwert ist, und wobei die wenigstens eine Richtung (110, 120) in einem Satz von Abtastwerten abgetastet wird, wobei eine erste Ebene räumlicher Unterteilung ausgewählt und mit mindestens einem ersten Abtastwert (31, 32, 33) des besagten Satzes verknüpft wird, für alle anderen Abtastwerte des besagten Satzes, die dem ersten Abtastwert in der besagten Richtung nachgelagert sind, die ausgewählte Ebene räumlicher Unterteilung hierarchisch höher oder gleich der ersten Ebene räumlicher Unterteilung ist,
   - Mittel zur Schätzung der Menge von gestreutem Licht durch Abtastung des besagten Milieus (10) entlang wenigstens einer Streurichtung (120), wobei die Abtastung von der mindestens einen ausgewählten Ebene räumlicher Unterteilung abhängig ist.

7. Computerprogrammprodukt, **dadurch gekennzeichnet, dass** es Programmcode-Anweisungen umfasst, um die Schritte des Verfahrens nach einem der Ansprüche 1 bis 5 auszuführen, wenn das besagte Programm auf einem Rechner ausgeführt wird.

## Claims

1. Method for estimating the amount of light scattered by a heterogeneous participating medium (10), **characterised in that** the method comprises the steps of:

   - selecting (71) at least one level of spatial subdivision of said medium (10) from among a plurality of hierarchical levels (21, 22, 23, 24) of spatial subdivision according to at least one item of error information representative of a light attenuation difference in said medium in at least one direction (110, 120) between two consecutive hierarchical levels, said selection comprising a comparison of said error information with a threshold value, wherein the selected level of spatial subdivision corresponds to the level of the highest hierarchical position and of the least fine subdivision if said at least one item of error information is less than said threshold value, and the at least one direction (110, 120) being sampled from a set of samples, a first level of spatial subdivision being selected and associated with at least one first sample (31, 32, 33) of said set, for all other samples of said set situated downstream of the first sample in said direction, the selected level of spatial subdivision is hierarchically greater than or equal to the first level of spatial subdivision;
- estimating (72) the amount of scattered light by sampling said medium (10) along at least one scattering direction (120), the sampling being a function of at least one selected level of spatial subdivision.

2. Method according to claim 1, **characterised in that** the method comprises a step of estimating at least one first value representative of the attenuation of the light scattered by at least one point of said medium situated along said at least one scattering direction.

3. Method according to claim 2, **characterised in that** the method comprises a step of estimating at least one second value representative of the attenuation of the light received from at least one light source in at least one direction of light emission in said at least one point situated along said at least one scattering direction.

4. Method according to claim 2, **characterised in that** the at least one item of error information is determined by comparing two first values, said two first values being respectively estimated for two consecutive hierarchical levels of spatial subdivision of said medium.

5. Method according to claim 3, **characterised in that** the at least one item of error information is determined by comparing two second values, said two second values being respectively estimated for two consecutive hierarchical levels of spatial subdivision of said medium.

6. Device configured for estimating the amount of light scattered by a heterogeneous participating medium (10), **characterised in that** the device comprises:

    - means for selecting at least one level of spatial subdivision of said medium (10) from among a plurality of hierarchical levels (21, 22, 23, 24) of spatial subdivision according to at least one item of error information representative of a light attenuation difference in said medium in at least one direction (110, 120) between two consecutive hierarchical levels, said selection comprising a comparison of said error information with a threshold value, wherein the selected level of spatial subdivision corresponds to the level of the highest hierarchical position and of the least fine subdivision if said at least one item of error information is less than said threshold value, and the at least one direction (110, 120) being sampled from a set of samples, a first level of spatial subdivision being selected and associated with at least one first sample (31, 32, 33) of said set, for all other samples of said set situated downstream of the first sample in said direction, the selected level of spatial subdivision is hierarchically greater than or equal to the first level of spatial subdivision;
    - means for estimating the amount of scattered light by sampling said medium (10) along at least one scattering direction (120), the sampling being a function of at least one selected level of spatial subdivision.

7. Computer program product, **characterised in that** it comprises program code instructions for carrying out the steps of the method according to one of claims 1 to 5, when said program is run on a computer.

**Fig 1**

**Fig 2A**

**Fig 2B**

**Fig 3A**

**Fig 3B**

**Fig 4A**

**Fig 4B**

**Fig 5**

6

61 — CPU

62 — Carte graphique

620 — GPUs

GRAM — 621

Paramètres représ. du milieu — 6210

Paramètres subdivision — 6211

Valeurs d'atténuation — 6212

Info erreur — 6213

Valeur seuil — 6214

630

Affichage

63

64 — Dispositifs I/O

66 — ROM

Prog — 660

67 — RAM

Prog — 670

Paramètres représ. du milieu — 671

65

68 — Alimentation

**Fig 6**

70 ⟶ ( Init )

Sélection niveau subdivision spatiale
71

Estimation de la quantité de lumière diffusée
72

**Fig 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S. CHANDRASEKHAR.** Radiative Transfer Equation. Dover Publications, 1960

- **DE Y. TOKUYOSHI et al.** A fast rendering method for a scene with participating media of anisotropic scattering property. *IEEE Proceedings of Computer Graphics International,* 2005